# EUROPEAN PATENT APPLICATION

(11) **EP 4 325 698 A1**
(43) Date of publication of application: **21.02.2024**
(21) Application number: 22879619.9
(22) Date of filing: 31.08.2022
(51) Int. Cl.: H02K 3/12

(54) **STATOR STRUCTURE OF HAIRPIN MOTOR**

(30) Priority: 04.07.2022 CN 202210787850
(71) Applicant: Hefei Jee Power Systems Co., Ltd., Baohe Industrial Zone 230051 Hefei AnHui (CN)
(72) Inventor: LIU, Lei, Hefei, Anhui 230051 (CN); WANG, Jian, Hefei, Anhui 230051 (CN); HUANG, Jian, Hefei, Anhui 230051 (CN); GU, Jie, Hefei, Anhui 230051 (CN); CHENG, Yong, Hefei, Anhui 230051 (CN)
(74) Representative: Osterhoff, Utz
(86) International application number: PCT/CN2022/116282
(87) International publication number: WO 2024/007438

(57) **Abstract**

The present application discloses a stator structure of a flat wire motor including a stator core, a first conductor, a second conductor and a third conductor; an inner wall of the stator core is provided circumferentially and uniformly with m stator slots; the first conductor, the second conductor and the third conductor are provided in the stator slots. The present application uses a 2-way N-layer winding solution to provide a flat wire winding connection solution with balanced three-phase resistance and no loop current by connecting six neutral point conductors, a first conductor, six second conductors and six third conductors; the three-phase outlet wire conductors and neutral point copper row are in two adjacent layers, and positions are concentrated after twisting the head to simplify the end structure.

## Description

### CROSS-REFERENCE TO RELATED APPLICATIONS

This application claims priority to Chinese Patent Application No. 202210787850.5, filed on July 4, 2022, the entire contents of which are incorporated herein by reference.

### TECHNICAL FIELD

The present application belongs to a motor technology field, and in particular relates to a stator structure of a flat wire motor.

### BACKGROUND

The stator structure of the existing hairpin flat wire motor consists of a three-phase inlet wire section, a first conductor section, a shaped hairpin section, and a neutral point section which are connected to form a current circuit. For 2-way parallel solutions, the inner or external inlet wire method is commonly used, the neutral point and the three-phase outlet wire come in and out of an innermost layer or an outermost layer. In order to form a closed circuit, the three-phase outlet wire and the neutral point are located at a longer interval, more circumferential dimensions of the outlet wire is occupied, a larger outlet envelope size is required. In addition, stator structures of some flat wire motors include some anisotropic conductors or copper rows, which are not only difficult to produce and process, but also increase the process difficulty of preparing coil windings later. Therefore, there is an urgent need to propose a new type of the stator structure of flat wire motors to solve at least one of the above problems.

### SUMMARY

For the above problems, the present application discloses a stator structure of a flat wire motor, including a stator core, a first conductor, a second conductor and a third conductor;
an inner wall of the stator core is provided circumferentially and uniformly with m stator slots, and
the first conductor, the second conductor and the third conductor are provided in the stator slots.

In an embodiment, the first conductor includes one bending portion of the first conductor, two extension portions of the first conductor and two external ends of the first conductor, where the two external ends of the first conductor are extended outward and bent at a same angle, and a middle span of the first conductor is a and an end span the first conductor is b.

In an embodiment, the second conductor includes one bending portion of the second conductor, two extension portions of the second conductor and two external ends of the second conductor, where one of the two external ends of the second conductor is extended outward and the other of the two external ends of the second conductor is extended inward, the two external ends of the second conductor are bent in a same direction, and a middle span of the second conductor is c and an end span of the second conductor is d.

In an embodiment, the second conductors are located in a n+24th, n+28th, n+30th, n+32nd, n+34th and n+38th stator slots respectively.

In an embodiment, the third conductor includes one bending portion of the third conductor, two extension portions of the third conductor and two external ends of the third conductor, where one of the two external ends of the third conductor is extended outward and the other of the two external ends of the third conductor is extended inward, and the two external ends of the third conductor are bent in a same direction, and a middle span of the third conductor is e and an end span of the third conductor is f.

In an embodiment, the two external ends of the second conductor are bent in an opposite direction to the two external ends of the third conductor.

In an embodiment, the end span d of the second conductor is equal to the end span f of the third conductor.

In an embodiment, the third conductors are located in a n+19th, n+23rd, n+25th, n+27th, n+29th and n+33rd stator slots respectively.

In an embodiment, the stator structure further includes a neutral point conductor,
the neutral point conductor includes one bending portion of the neutral point conductor, two extension portions of the neutral point conductor and two external ends of the neutral point conductor, the two external ends of the neutral point conductor are extended outward and bent at different angles, and a middle span of the neutral point conductor is g and an end span of the neutral point conductor is h.

In an embodiment, the neutral point conductors are located in a n+2nd, n+3rd, n+6th, n+7th, n+10th and n+11 th stator slots respectively.

In an embodiment, the stator structure further includes a neutral point copper row, where the neutral point copper row is an arc-shaped flat copper row, provided at a hairpin end or a solder end, and connected to ends of a plurality of the neutral point conductors.

In an embodiment, the stator structure further includes a three-phase outlet wire conductor;
where a middle span of the three-phase outlet wire conductor is a and an end span of the three-phase outlet wire conductor is b, and the three-phase outlet wire conductor is connected to the first conductor;
the three-phase outlet wire conductors are located in a nth, n+1st, n+4th, n+5th, n+8th, n+9th stator slots respectively.

In an embodiment, the stator structure further includes a outlet wire conductor,
two ends of the outlet wire conductor are bent in an opposite direction, and the outlet wire conductor is connected to the first conductor;
the outlet wire conductor is provided in an outermost layer of the stator slot or in a layer adjacent to the outermost layer of the stator slot.

In an embodiment, the middle span a of the first conductor, the middle span c of the second conductor, the middle span e of the third conductor and the middle span g of the neutral point conductor are equal.

Compared with the related art, the embodiment of the present application has at least the following advantages: a 2-way N-layer winding solution is used, six neutral point conductors, the first conductor, six second conductors and six third conductors are connected to provide a flat wire winding connection solution with balanced three-phase resistance and no loop current; the three-phase outlet wire conductors and the neutral point copper row are in two adjacent layers, and the positions are concentrated after twisting the head, the end structure is simplified; the neutral point copper row is arc-shaped flat copper row, with a simple structure, and easy to be processed and prepared.

Other features and advantages of the present application will be set forth in the following specification and partially become apparent from the specification or are understood by carrying out the present application. The purpose and other advantages of the present application can be realized and obtained by the structures indicated in the specification and in the drawings.

### BRIEF DESCRIPTION OF THE DRAWINGS

In order to more clearly illustrate the technical solutions in the embodiments of the present application or related art, a brief description of the drawings in the description of the embodiments or related art is given below. It is obvious that the drawings in the following description are some embodiments of the present application, and other drawings can be obtained by those skilled in the art according to these drawings without creative work.
FIG. 1 is a schematic view of a stator structure according to an embodiment of the present application.
FIG. 2 is a schematic structural view of a stator core and an insulating paper according to an embodiment of the present application.
FIG. 3 is a top view of the stator structure shown in FIG. 1.
FIG. 4 is a schematic view of a three-phase winding according to an embodiment of the present application.
FIG. 5 is a schematic view of one-phase winding according to an embodiment of the present application.
FIG. 6 is a schematic view of a preferred winding according to an embodiment of the present application.
FIG. 7 is a schematic view of a first conductor according to an embodiment of the present application.
FIG. 8 is a schematic view of a second conductor according to an embodiment of the present application.
FIG. 9 is a schematic view of a third conductor according to an embodiment of the present application.
FIG. 10 is a schematic view of a neutral point conductor according to an embodiment of the present application.
FIG. 11 is a schematic view of a stator structure according to another embodiment of the present application.
FIG. 12 is a schematic view of windings of the stator structure shown in FIG. 11.
FIG. 13 is a schematic view of expansion of the windings of the stator structure shown in FIG. 11.
FIG. 14 is a schematic view of the expansion of one-phase winding of the stator structure shown in FIG. 11.
FIG. 15 is a schematic diagram of a preferred winding of the stator structure shown in FIG. 11.
FIG. 16 is a schematic view of an installation of the first conductor.
FIG. 17 is a schematic view of an installation of the outlet wires.
FIG. 18 is a schematic view of an installation of the second conductor.
FIG. 19 is a schematic view of an installation of the third conductor.

The reference signs: 1, stator core; 2, insulating paper; 3, hairpin end; 4, solder end; 5, neutral point copper row; 6, three-phase outlet wire conductor; 7, first conductor; 71, bending portion of the first conductor; 72, extension portion of the first conductor; 73, external end of the first conductor; 8, second conductor; 81, bending portion of the second conductor; 82, extension portion of the second conductor; 83, external end of the second conductor; 9, third conductor; 91, bending portion of the third conductor; 92, extension portion of the third conductor; 93, external end of the third conductor; 10, neutral point conductor; 101, bending portion of the neutral point conductor; 102, extension portion of the neutral point conductor; 103, external end of the neutral point conductor; 11, stator slot; 12, outlet wire conductor.

### DETAILED DESCRIPTION OF THE EMBODIMENTS

In order to make the purpose, technical solutions and advantages of the embodiments of the present application clearer, the technical solutions in the embodiments of the present application will be clearly and completely described below in conjunction with the drawings in the embodiments of the present application, and it is clear that the embodiments described are a part of the embodiments of the present application, and not all of them. Based on the embodiments in the present application, all other embodiments obtained by those skilled in the art without any creative labor fall within the scope of the present application.

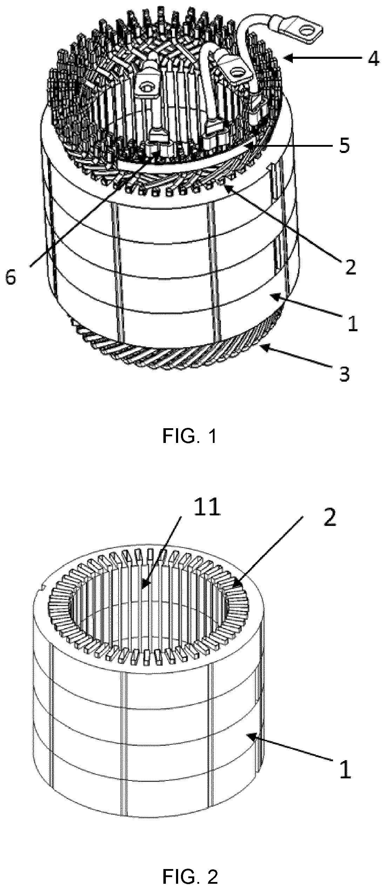

As shown in FIG. 1, the present application provides a stator structure of a flat wire motor, including: a stator core 1, a first conductor 7, a second conductor 8, and a third conductor 9.

An inner wall of the stator core 1 is provided circumferentially and uniformly with m stator slots 11, m is greater than and equal to 48 and is an integer multiple of 12, such as m is 48.

The first conductor 7, the second conductor 8 and the third conductor 9 are provided in the stator slots 11 and one end of the stator core 1 is formed to be a hairpin end 3 and the other end of the stator core 1 is formed to be a solder end 4.

In some embodiments, the stator core 1 is formed by a certain number of silicon steel sheets which are laminated, which can be riveted, soldered or glued in various ways, 48 rectangular stator slots 11 are uniformly distributed along the circumference in a circular array on the stator core 1. As shown in FIG. 2, the insulating paper 2 of a certain thickness is inserted in the rectangular stator slot 11 for insulation.

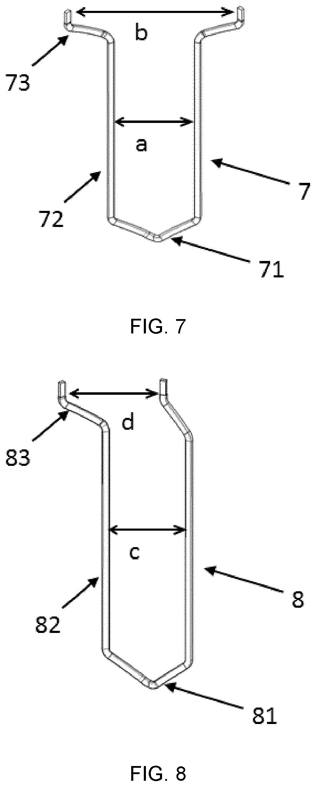

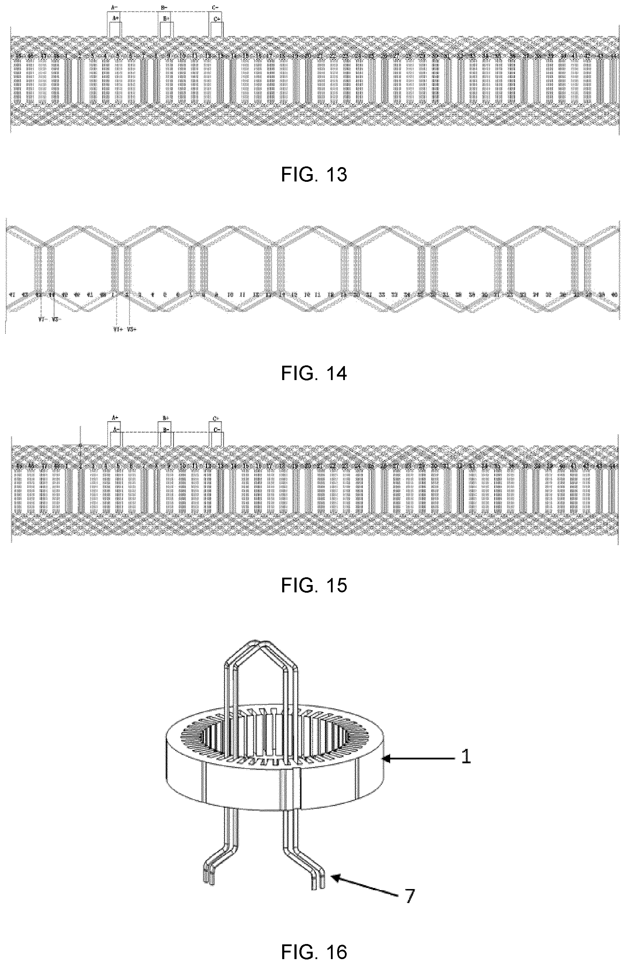

As shown in FIG. 7, the first conductor 7 includes one bending portion 71 of the first conductor, two extension portions 72 of the first conductor, and two external ends 73 of the first conductor, the two external ends 73 of the first conductor are extended outward in a reverse direction and bent at a same angle, a middle span of the first conductor 7 is a and an end span the first conductor 7 is b. The first conductor 7 is provided in each layer of conductors. b is greater than a, a is 6 and b is 12. a may also be a natural number such as 4, 5, 7, etc., and b may be a natural number such as 10, 11, 13, etc., and the specific value may be determined according to the actual situation. As shown in FIG. 16, the first conductor 7 is provided in the stator core 1.

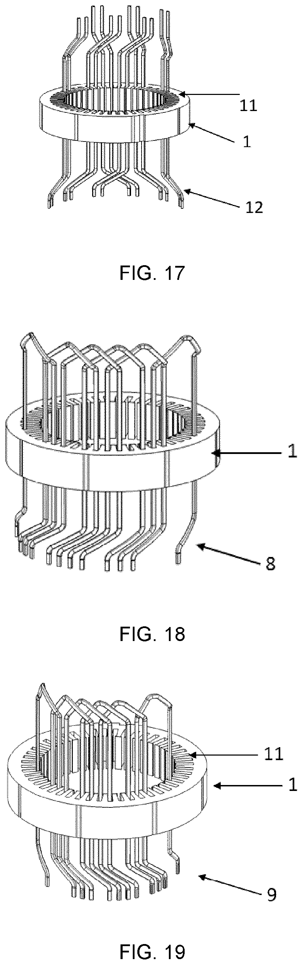

As shown in FIG. 8, the second conductor 8 includes one bending portion 81 of the second conductor, two extension portions 82 of the second conductor and two external ends 83 of the second conductor, one of the two external ends 83 of the second conductor is extended outward and the other of two external ends 83 of the second conductor is extended inward, the two external ends 83 of the second conductor are bent in the same direction, a middle span of the second conductor 8 is c and an end span of the second conductor 8 is d, the second conductor 8 is provided in the external layer of the stator slot 11 as shown in FIG. 18. where d is greater than c, such as c is 6 and d is 7. c may also be a natural number such as 4, 5, 7, etc., and d may be a natural number such as 8, 9, etc., the specific value may be determined according to the actual situation.

Extension portions of six second conductors 8 are located at the n+24th, n+28th, n+30th, n+32nd, n+34th and n+38th stator slots 11. 1 is less than and equal to n and n is less than and equal to m and n is a natural number.

In some embodiments, when n is 1 and m is 48, extension portions of the second conductors 8 are located in the 25th, 29th, 31st, 33rd, 35th, and 39th stator slots 11. It should be noted that the conductors in the stator slots 11 are arranged in a circular reciprocal manner, such as when m is 48 and n is 24, i.e., one extension portion of one second conductor 8 is located in the 48th stator slot 11, and extension portions of the remaining five second conductors 8 are located in the 4th, 6th, 8th, 10th, and 14th stator slots 11 in sequence.

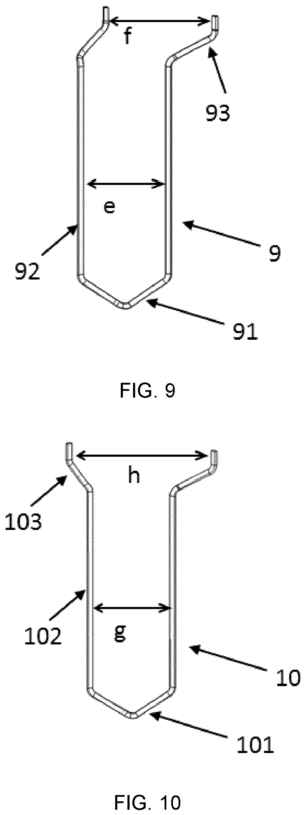

As shown in FIG. 9, the third conductor 9 includes one bending portion 91 of the third conductor, two extension portion 92 of the third conductor, and two external ends 93 of the third conductor, one of the two external ends 93 of the third conductor is extended outward and the other of two external ends 93 of the third conductor is extended inward, and the two external ends 93 of the third conductor are bent in a same direction, and a middle span of the third conductor 9 is e and an end span of the third conductor 9 is f, and the third conductor 9 is located in an inner layer of the stator slot 11 as shown in FIG. 19. Where f is greater than e. e is 6 and f is 7. e may also be a natural number such as 4, 5, 7, etc., and f may be a natural number such as 8, 9, etc., the specific value may be determined according to the actual situation.

The two external ends 83 of the second conductor 8 are bent in an opposite direction to the two external ends 93 of the third conductor 9. The end span d of the second conductor 8 is equal to the end span f of the third conductor 9.

Extension portions of six third conductors 9 are located in the n+19th, n+23rd, n+25th, n+27th, n+29th and n+33rd stator slots 11, for example, extension portions of six third conductors 9 are located in the 20th, 24th, 26th, 28th, 30th and 34th stator slots 11.

As shown in FIG. 10, the stator structure of the flat wire motor further includes a neutral point conductor 10.

The neutral point conductor 10 includes one bending portion 101 of the neutral point conductor, two extension portions 102 of the neutral point conductor and two external ends 103 of the neutral point conductor, the two external ends 103 of the neutral point conductor are extended outward in a reverse direction and bent at different angles, and a middle span of the neutral point conductor 10 is g and an end span of the neutral point conductor 10 is h. Where h is greater than g, g is 6 and h is 10. g may also be a natural number such as 4, 5, 7 , h can be a natural number such as 11, 12, etc., the specific value can be determined according to the actual situation.

The middle span a of the first conductor 7, the middle span c of the second conductor 8, the middle span e of the third conductor 9, and the middle span g of the neutral point conductor 10 are all equal.

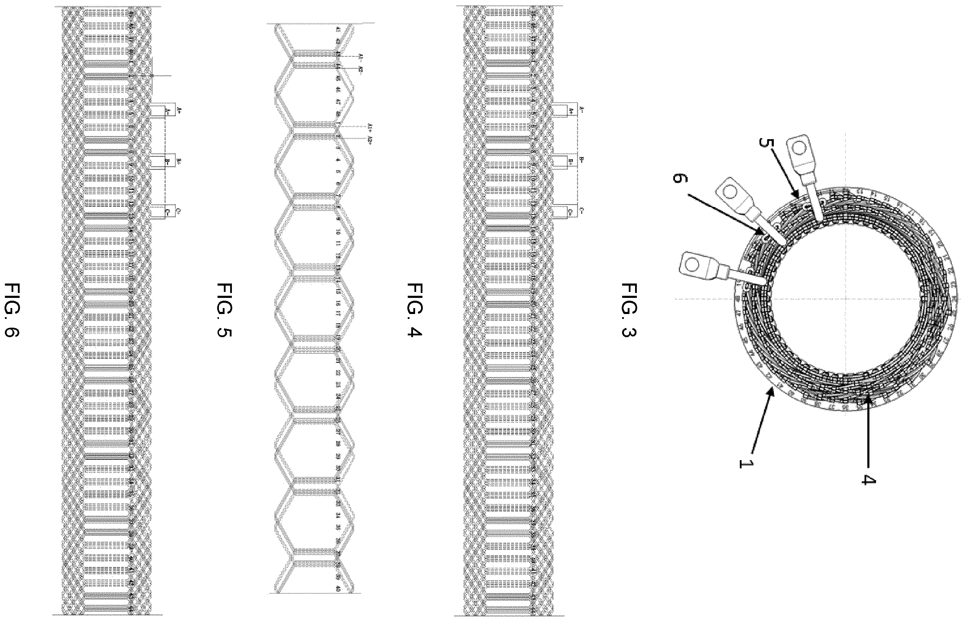

As shown in FIG. 3, the stator structure of the flat wire motor further includes a neutral point copper row 5.

The neutral point copper row 5 is an arc-shaped flat copper row, provided at the hairpin end 3 or solder end 4, and respectively connected to one end of each of six neutral point conductors 10, extension portions of the six neutral point conductors 10 are located at the n+2, n+3, n+6, n+7, n+10 and n+11 stator slots 11, for example, extension portions of the neutral point conductor 10 are located in the 3rd, 4th, 7th, 8th, 11th, and 12th stator slots 11.

The stator structure of the flat wire motor further includes a three-phase outlet wire conductor 6.

A middle span of the three-phase outlet wire conductor 6 is a and an end span of the three-phase outlet wire conductor 6 is b, the three-phase outlet wire conductor 6 has the same structure as the first conductor 7 and is connected to the first conductor 7.

Extension portions of the three-phase outlet wire conductors 6 are located in the nth, n+1, n+4, n+5, n+8, n+9 stator slots 11, respectively, for example, extension portions of the three-phase outlet wire conductors 6 are located in the 1st, 2nd, 5th, 6th, 9th, 10th stator slots 11, respectively.

The three-phase outlet wires are divided into U, V and W outlet wires, each three-phase outlet wire is connected to a copper nose by a soft copper wire.

As shown in FIG. 4, the three-phase winding of the stator structure is a 2-way parallel solution, which is formed by the first conductor 7 by stacking and winding as shown in FIG. 4, to achieve a winding connection with balanced three-phase and no loop current. Two branches of the U-phase winding are a first branch A1 and a second branch A2, with an input A+ and an output A-. Two branches of the V-phase winding are a third branch B1 and a fourth branch B2, with an input B+ and an output B-. The two branches of the W-phase winding are a fifth branch C1 and a sixth branch C2, with an input C+ and an output C-. As shown in FIG. 5, in the expansion diagram of the U-phase winding, the first branch A1 has an input A1 + and an output A1 -, and the second branch A2 has an input A2+ and an output A2-. In an embodiment, as shown in FIG. 6, the inlet wire is located at the sixth layer and the neutral point is located at the fifth layer. The present application uses a 2-way N-layer, with N greater than 6, and provides a flat wire winding connection solution with balanced three-phase resistance and no loop current by connecting six neutral point conductors 10, a first conductor 7, six second conductors 8 and six third conductors 9.

In some embodiments, as shown in FIG. 2, the stator core 1 of the flat wire motor consists of a plurality of silicon steel sheets which are laminated together, the stator core 1 contains a stator yoke, a stator tooth, and a stator tooth head. The three sections of the stator core 1 enclose to form 48 stator slots, and the insulating paper 2 of a certain length and thickness is inserted in each slot for insulation.

The winding coil of the entire flat wire motor shown in FIG. 1 contains linear section conductors inserted into the stator slots 11 of the stator core 1. The linear section conductors in one end of the stator core 1 are connected by a U-shaped hairpin to form the hairpin end 3, and the linear section conductors in the other end of the stator core 1 can be soldered by means of a twisted head flare to form the solder end 4.

The three-phase neutral connection point of the motor is also located in the outermost layer of the stator slot 11 of the stator core 1 or in a layer adjacent to outermost layer of the stator slot 11 of the stator core 1. The electrical shorting of the six coil branches can be achieved by a simple neutral point copper row 5.

The third conductor 9 and the second conductor 8 used in the direction-changed connection of each phase of each branch are located in the innermost and outermost layers within the stator slot 11, respectively.

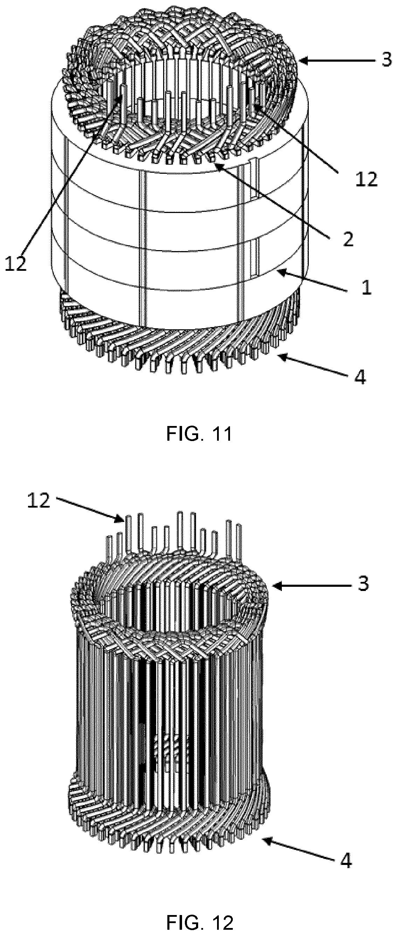

As shown in FIG. 11, another embodiment of the present application provides a stator structure of a flat wire motor, which is different from the stator structure in the previous embodiment in that it includes the outlet wire conductor 12 but doesn't include the neutral point copper row 5 and the three-phase outlet wire conductor 6.

As shown in FIG. 17, two ends of 12 outlet wire conductors 12 are bent in an opposite direction and are connected to the first conductor 7. The outlet wire conductors 12 are provided in the outermost layer of the stator slot 11 or in a layer adjacent to the outermost layer of the stator slot 11. The six long outlet wire conductors 12 can be used as three-phase outlet wires (or neutral points), then the other six short outlet wire conductors 12 can be used as neutral points (or three-phase outlet wires).

As shown in FIG. 12, in order to achieve electrical connections between conductors in the 48 stator slots 11, it is necessary to use hairpins or soldering, etc. The stator winding of the 48 stator slots 11 has two parallel branches. There can be various spans between the conductors in the stator slots 11 connected to each branch, such as equal span 6, span 5, span 7, etc., which are distributed in the circumference direction of one stator according to the span rule. As shown in FIG. 13, assuming that 2N conductors can be inserted in each stator slot 11, there are 2N layers of conductors in each stator slot 11 (N is a natural number greater than and equal to 1), and it is declared that one layer of the conductor near a bottom of the stator slot 11 is the external layer and one layer of the conductor near an opening of the stator slot 11 is the inner layer. The conductors in the corresponding stator slot 11 in each branch are installed in the stator slot 11 with regular spans according to the cyclic adjacent layers until a cycle ends and it is switched to a next pair of adjacent layers for a cyclic installation arrangement. In particular, the inlet and outlet wires of the three-phase winding of the stator of the flat wire motor are arranged in the outermost layer of the stator slot 11. In particular, a number of third conductors 9 are used for electrical cross-connections in the direction-changed connection of each branch, and these twist-head reversing hairpin coils are located in the innermost layer of the stator slot 11. In order to achieve the above winding installation, the entire winding solder end 4 needs to be flared out to the right size towards the external layer, to avoid the interference between the motor rotor and the inner layer of the winding, and to finally achieve a winding connection with the balanced three-phase and no loop current. As shown in FIG. 14, it is the winding connection method of one-phase winding. As shown in FIG. 15, it is the preferred solution for the winding of the embodiment, the inlet wire is located at the sixth layer and the neutral point is located at the fifth layer.

Despite the present application is described in detail with reference to the previous embodiments, it should be understood by those skilled in the art that it is still possible to modify the technical solutions in the previous embodiments, or to make equivalent replacements for some of the technical features of the previous embodiments, and these modifications or replacements do not make the essence of the corresponding technical solutions depart from the scope of the technical solutions of the embodiments of the present application.

## Claims

1. A stator structure of a flat wire motor, **characterized by** comprising:
a stator core (1);
a first conductor (7);
a second conductor (8); and
a third conductor (9),
wherein an inner wall of the stator core (1) is provided circumferentially and uniformly with m stator slots (11), and
the first conductor (7), the second conductor (8) and the third conductor (9) are provided in the stator slots (11).

2. The stator structure of the flat wire motor according to claim 1, wherein the first conductor (7) comprises one bending portion (71) of the first conductor, two extension portions (72) of the first conductor and two external ends (73) of the first conductor, the two external ends (73) of the first conductor are extended outward and bent at a same angle, and a middle span of the first conductor (7) is a and an end span the first conductor (7) is b.

3. The stator structure of the flat wire motor according to claim 2, wherein the second conductor (8) comprises one bending portion (81) of the second conductor, two extension portions (82) of the second conductor and two external ends (83) of the second conductor, one of the two external ends (83) of the second conductor is extended outward and the other of the two external ends (83) of the second conductor is extended inward, the two external ends (83) of the second conductor are bent in a same direction, and a middle span of the second conductor (8) is c and an end span of the second conductor (8) is d.

4. The stator structure of the flat wire motor according to claim 3, wherein the second conductors (8) are located in a n+24th, n+28th, n+30th, n+32nd, n+34th and n+38th stator slots (11) respectively.

5. The stator structure of the flat wire motor according to claim 4, wherein the third conductor (9) comprises one bending portion (91) of the third conductor, two extension portions (92) of the third conductor and two external ends (93) of the third conductor, one of the two external ends (93) of the third conductor is extended outward and the other of the two external ends (93) of the third conductor is extended inward, and the two external ends (93) of the third conductor are bent in a same direction, and a middle span of the third conductor (9) is e and an end span of the third conductor (9) is f.

6. The stator structure of the flat wire motor according to claim 5, wherein the two external ends (83) of the second conductor (8) are bent in an opposite direction to the two external ends (93) of the third conductor (9).

7. The stator structure of the flat wire motor according to claim 6, wherein the end span d of the second conductor (8) is equal to the end span f of the third conductor (9).

8. The stator structure of the flat wire motor according to claim 7, wherein the third conductors (9) are located in a n+19th, n+23rd, n+25th, n+27th, n+29th and n+33rd stator slots (11) respectively.

9. The stator structure of the flat wire motor according to claim 8, further comprising:
a neutral point conductor (10),
wherein the neutral point conductor (10) comprises one bending portion (101) of the neutral point conductor, two extension portions (102) of the neutral point conductor and two external ends (103) of the neutral point conductor, the two external ends (103) of the neutral point conductor are extended outward and bent at different angles, and a middle span of the neutral point conductor (10) is g and an end span of the neutral point conductor (10) is h.

10. The stator structure of the flat wire motor according to claim 9, wherein the neutral point conductors (10) are located in a n+2nd, n+3rd, n+6th, n+7th, n+10th and n+11th stator slots (11) respectively.

11. The stator structure of the flat wire motor according to claim 10, further comprising:
a neutral point copper row (5),
wherein the neutral point copper row (5) is an arc-shaped flat copper row, provided at a hairpin end (3) or a solder end (4), and connected to ends of a plurality of the neutral point conductors (10).

12. The stator structure of the flat wire motor according to claim 1, further comprising:
a three-phase outlet wire conductor (6),
wherein a middle span of the three-phase outlet wire conductor (6) is a and an end span of the three-phase outlet wire conductor (6) is b, and the three-phase outlet wire conductor (6) is connected to the first conductor (7);
the three-phase outlet wire conductors (6) are located in a nth, n+1st, n+4th, n+5th, n+8th, n+9th stator slots (11) respectively.

13. The stator structure of the flat wire motor according to claim 1, further comprising:
a outlet wire conductor (12),
wherein two ends of the outlet wire conductor (12) are bent in an opposite direction, and the outlet wire conductor (12) is connected to the first conductor (7);
the outlet wire conductor (12) is provided in an outermost layer of the stator slot (11) or in a layer adjacent to the outermost layer of the stator slot (11).

14. The stator structure of the flat wire motor according to claim 9, wherein the middle span a of the first conductor (7), the middle span c of the second conductor (8), the middle span e of the third conductor (9) and the middle span g of the neutral point conductor (10) are equal.
